# EUROPÄISCHE PATENTANMELDUNG

(11) **EP 2 626 321 A1**
(43) Veröffentlichungstag der Anmeldung: **14.08.2013**
(21) Anmeldenummer: 13157954.2
(22) Anmeldetag: 28.05.2009
(51) Int. Cl.: B65G 21/16, B65G 21/18

(54) **Endlosförderer mit einem gekrümmten Weg**

(30) Priorität: 14.08.2008 DE 102008044430
(62) Teilanmeldung aus: 09161374.5
(71) Anmelder: Krones AG, 93073 Neutraubling (DE)
(72) Erfinder: Seger, Martin, 92318 Neumarkt i. d. Opf. (DE); Hausladen, Wolfgang, 93099 Mötzing (DE)
(74) Vertreter: Reichert, Werner Franz

(57) **Zusammenfassung**

Es ist ein Spiralförderer (1) zum Befördern von Artikeln (3) durch ein Endlosband (5) offenbart. Das Endlosband (5) weist seiner Länge nach zwei Seiten (6) auf und ist auf einem Träger (11) geführt und aus einer Vielzahl von Kettengliedern (9) aufgebaut. Das Endlosband (5) beschreibt in mindestens einem Abschnitt einen gekrümmten Weg (8), der einen Krümmungsradius (44) in Bezug auf einen Mittelpunkt (42) eines Kreises (40) beschreibt. Der Träger (11) hat mindestens eine innere Führung (17) für das Endlosband (5) ausgebildet, die entlang eines inneren Seitenabschnitts (7) derjenigen Seite (6) des Endlosbands (5) verläuft, die bei dem gekrümmten Weg (8) unmittelbar dem Mittelpunkt (42) gegenüber liegt. Eine Vielzahl von Rollen (21) ist entlang der inneren Führung (17) angeordnet, wobei die Rollen (21) mit jeweils einer Seitenfläche (23) der Kettenglieder (9) zusammenwirken.

## Beschreibung

Die vorliegende Erfindung betrifft einen Spiralförderer zum Befördern von Artikeln durch ein Endlosband, das in mindestens einem Abschnitt einen gekrümmten Weg beschreibt. Die vorliegende Erfindung betrifft insbesondere einen Spiralförderer zum Befördern von Artikeln mit einem Endlosband, das in mindestens einem Abschnitt einen gekrümmten Weg beschreibt, wobei das Endlosband seiner Länge nach zwei Seiten aufweist und auf einem Träger geführt und aus einer Vielzahl von Kettengliedern aufgebaut ist. Der gekrümmte Weg beschreibt einen Krümmungsradius in Bezug auf einen Mittelpunkt eines Kreises. Der Träger hat mindestens eine innere Führung für das Endlosband ausgebildet, die entlang eines inneren Seitenabschnitts derjenigen Seite des Endlosbands verläuft, die bei dem gekrümmten Weg unmittelbar dem Mittelpunkt gegenüber liegt.

Das europäische Patent EP 1 009 692 B1 offenbart ein Fördermittel zum Aufwärtsfördern von Artikeln auf einem schraubenförmigen Weg auf einem Endlosband aus Kettengliedern, die an Latten in einer Mittelachse der Latten angebracht sind. Die Latten zusammen bilden das Endlosband. Zumindest ein Teil der Latten ist jeweils mit zumindest einer Rolle bzw. Führungswalze versehen, um eine ruhige und gleichmäßige Bewegung des Fördermittels zu gewährleisten. Da die Rollen zwischen den Latten und dem Träger an dem sich bewegenden Endlosband angeordnet sind, können fehlerhafte Rollen weder leicht detektiert noch einzeln leicht und schnell entnommen bzw. angebracht und/oder ersetzt werden.

Das europäische Patent EP 1 135 313 B1 offenbart ein Förderband aus Gliedkörpern bzw. Kettengliedern. Jeweils ein Kettenglied umfasst zwei Gabelschenkeln auf einer Seite und eine Schnauze auf der gegenüberliegenden Seite. Die Schnauze wirkt mit der Gabelöffnung des benachbarten Kettenglieds formschlüssig zusammen. An mindestens einer Seite jedes Kettenglieds ist eine Rolle angeordnet, die eine Führung bzw. Laufschiene entlang des Förderbands berührt, um die Reibung zu vermindern, wenn eine Steuerung für eine Innenkurvenstelle in einer Bandbahn erfolgt.

Wie detailliert im vorgenannten Stand der Technik beschrieben, treten an gekrümmten Wegabschnitten bei Fördermitteln mit Bändern aus Kettengliedern bekanntlich die Probleme auf, dass Polygoneffekte und auf die Kettenglieder wirkende Radial- und Reibungskräfte eine ruhige, gleichmäßige und wenig Kraft beanspruchende Bewegung der Kettenglieder gefährden.

Aufgabe der Erfindung ist daher, einen Spiralförderer zum Befördern von Artikeln mit einem Endlosband bereitzustellen, das in mindestens einem Abschnitt einen gekrümmten Weg beschreibt, so dass eine ruhige und gleichmäßige Bewegung des Spiralförderers gewährleistet ist. Ferner soll der Spiralförderer leicht zu warten sowie einfach und kostengünstig herzustellen sein.

Die obige Aufgabe wird durch einen Spiralförderer zum Befördern von Artikeln durch ein Endlosband gelöst, das die Merkmale des Patentanspruchs 1 umfasst.

Im Folgenden wird der erfindungsgemäße Spiralförderer zum Befördern von Artikeln durch ein Endlosband beschrieben. Dabei können die Artikel wahlweise auf dem Endlosband stehend befördert werden. Es sind jedoch auch andere Konstellationen denkbar, bei denen die Artikel mittels des Endlosbandes befördert werden, ohne dass sie dabei auf diesem stehen müssen. Das Endlosband ist auf einem Träger geführt und aus einer Vielzahl von Kettengliedern aufgebaut. Mindestens ein Abschnitt des Endlosbands beschreibt einen gekrümmten Weg, der wiederum einen Krümmungsradius in Bezug auf einen Mittelpunkt eines Kreises beschreibt.

Um die oben beschriebenen Polygoneffekte, Radial- und Reibungskräfte zu vermeiden bzw. zu reduzieren, und um außerdem ein Kippeln bzw. eine Auf- und Abbewegung der Kettenglieder entlang des gekrümmten Wegs zu vermeiden, hat der Träger für das Endlosband mindestens eine innere Führung ausgebildet. Die innere Führung des Trägers wirkt mit einem inneren Seitenabschnitt derjenigen Seite des Endlosbands zusammen, die bei dem gekrümmten Weg unmittelbar dem Mittelpunkt gegenüber liegt. Diese Seite des Endlosbands liegt beim gekrümmten Weg also näher am Mittelpunkt des oben beschriebenen Kreises als die andere, gegenüberliegende Seite des Endlosbands. Die beiden Seiten verlaufen entlang der Länge des Endlosbands und beranden das Endlosband.

Für eine noch bessere Führung der Kettenglieder ist erfindungsgemäß eine Vielzahl von Rollen entlang der inneren Führung am Träger angeordnet. Diese Rollen wirken mit jeweils einer Seitenfläche der Kettenglieder zusammen, wobei die Seitenflächen entlang des oben beschriebenen inneren Seitenabschnitts am gekrümmten Weg verlaufen.

Ein Vorteil der Erfindung ist, dass fehlerhafte Rollen leicht detektierbar und austauschbar sind, da die Rollen ortsfest an der inneren Führung des Trägers eingebaut sind. Die Rollen sind insbesondere leicht und schnell austauschbar, wenn für die Rollen jeweils eine frei zugängliche Rollenaufnahme am Träger vorgesehen ist. Rollen gemäß dem Stand der Technik sind üblicherweise an den Kettengliedern und/oder an anderen Stellen des Endlosbands angebracht und bewegen sich daher während des Transports mit dem Endlosband.

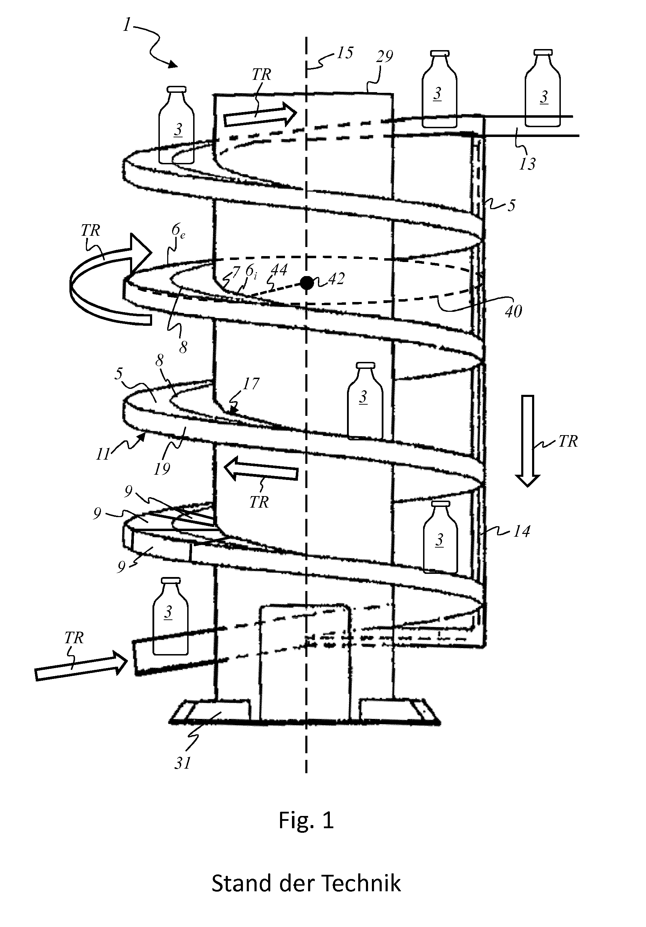

In einer Ausführungsform der Erfindung überwindet das Endlosband des Spiralförderers mindestens einen Höhenunterschied. Das trifft insbesondere auf Spiralförderer zu (siehe Figur 1), bei denen der gekrümmte Weg eine kontinuierlich von unten nach oben verlaufende Spiralkurve ist und die Kettenglieder auf der Spiralkurve eine Zugkette bilden.

Polygoneffekte können bekanntlich weiter vermieden werden, wenn die mit den Rollen zusammenwirkenden Seitenflächen der Kettenglieder eine Krümmung ausgebildet haben, die der Krümmung der inneren Führung entlang des gekrümmten Wegs entspricht.

In einer Ausführungsform der Erfindung stehen während des Transports je Kettenglied stets mindestens zwei Rollen der inneren Führung mit dem jeweiligen Kettenglied in Rollkontakt. Auch das reduziert Kippbewegungen der Kettenglieder, insbesondere wenn die Kettenglieder sowohl entlang eines gekrümmten Wegs geführt werden als auch einen Höhenunterschied überwinden müssen, wie das bei einem Spiralförderer der Fall ist. Die Abstände zwischen jeweils zwei benachbarten Rollen müssen entsprechend und passend zur Länge der einzelnen Kettenglieder eingestellt werden. Zum manuellen oder automatischen Einstellen der Abstände zwischen den Rollen können zusätzliche Mittel vorgesehen sein.

Die beschriebenen Rollen reduzieren unerwünschte Polygoneffekte und Radial- und Reibungskräfte, die auf die Seiten der Kettenglieder einwirken. Zusätzlich können bekanntlich zwischen den Unterflächen der Kettengliedern und der Oberfläche des Trägers wirkende Reibungskräfte reduziert werden, wenn bei mindestens einigen der Kettenglieder mindestens eine Tragrolle unterhalb jedes dieser Kettenglieder angeordnet ist. Die Tragrollen an den Unterseiten der Kettenglieder rollen auf der Oberseite des Trägers für das Endlosband.

Die Kettenglieder des Endlosbands sind einfach und kostengünstig herstellbar, wenn sie Spritzgussteile umfassen, insbesondere jedes Kettenglied ein einziges Spritzgussteil ist, beispielsweise aus einem Kunststoff.

Bekannte Gleitmittel wie Öle oder Fette sorgen zusätzlich für eine gute (TAB-)Führung der Kettenglieder.

Neben den beschriebenen Ausführungsvarianten kann bei einer weiteren Ausführungsform des Spiralförderers auch vorgesehen sein, dass das Endlosband mit zusätzlichen Tragelementen als Auflage für die zu befördernden Artikel versehen ist. Generell können die Artikel die unterschiedlichsten Gegenstände sein, bspw. Getränkebehälter oder Flaschen oder auch Gebinde mit Getränkebehältern bzw. Flaschen o. dgl. Die erwähnten Tragelemente können bspw. durch Tragplatten gebildet sein, die sich an die Gestalt und Größe der zu fördernden Artikel optimal anpassen lassen, so dass ein sehr zuverlässiger und störungsfreier Transport aller gewünschten Gegenstände gewährleistet ist.

Eine weitere Ausführungsvariante des erfindungsgemäßen Spiralförderers ist dadurch gekennzeichnet, dass das Endlosband mit zusätzlichen Mitnehmerelementen als Auflage und/oder Anlageflächen für die zu befördernden Artikel versehen ist. Diese Mitnehmerelemente können bspw. durch lamellenförmige Scheiben oder Mitnehmerstege gebildet sein, die in gewünschtem Abstand hintereinander an der Kette montiert sind, so dass eine genaue Anpassung an die Größe und Abmessungen der zu transportierenden Artikel ermöglicht ist. Eine solche Ausführungsvariante ist besonders für den Gebindetransport oder für den Transport von sonstigem Stückgut geeignet. Auch können die Mitnehmerelemente durch Klammern nahezu beliebiger Form und Gestalt gebildet sein, so dass ein Transport nahezu beliebig geformter Gegenstände ermöglicht ist. Eine vorteilhafte Ausführungsvariante kann ggf. auch die Kombination einer Förderkette mit einer weiteren, darauf montierten Mitnehmerkette oder einem anderen Zugmittel vorsehen. Hierbei dient die untere Kette als Zugmittel, während die obere Kette zum Abstellen von Flaschen oder anderen Artikeln dienen kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine Seitenansicht eines Spiralförderers nach dem Stand der Technik.
Figur 2 zeigt eine schematische Draufsicht auf einen Abschnitt eines Endlosbands gemäß einer Ausführungsform des erfindungsgemäßen Spiralförderers.
Figur 3 zeigt schematisch einen Querschnitt entlang des Krümmungsradius des Abschnitts des Endlosbands gemäß der Ausführungsform des erfindungsgemäßen Spiralförderers nach Figur 2.
Figur 4 zeigt eine schematische Detailansicht der in Figur 3 gezeigten inneren Führung.
Figur 5 zeigt eine schematische Detailansicht der in Figur 3 gezeigten äußeren Führung.
Figur 6 zeigt eine schematische Draufsicht einer anderen Ausführungsform des erfindungsgemäßen Spiralförderers, wobei das Endlosband des Spiralförderers unterschiedlich gerichtete Krümmungen aufweist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung ausgestaltet sein kann und stellen keine abschließende Begrenzung dar.

**Figur 1** zeigt eine schematische Seitenansicht eines Spiralförderers 1 nach dem Stand der Technik. Artikel 3, hier Getränkeflaschen, werden nacheinander auf einem Endlosband 5 in einer Transportrichtung TR transportiert. Das Endlosband 5 liegt auf einem Träger 11 auf. Die Artikel 3 werden zunächst am unteren Ende des Spiralförderers 1 dem Spiralförderer 1 zugeführt, dann auf einem gekrümmten, hier kontinuierlich spiralförmigen Weg 8 um einen Rahmen 29 des Spiralförderers 1 nach oben transportiert. Am oberen Ende des Spiralförderers 1 werden die Artikel 3 dann üblicherweise auf der erreichten Höhe auf einem weiterführenden oberen Wegabschnitt 13 transportiert. Das Endlosband 5 wird am oberen Ende des Spiralförderers 1 vor dem oberen Wegabschnitt 13 nach unten in einen Rücklaufweg 14 zurück bis zum Anfang am unteren Ende des Spiralförderers 1 geführt.

In der in Figur 1 dargestellten Ausführungsform steht der Rahmen 29 des Spiralförderers 1 auf Füßen 31. Die mittlere Längsachse des Rahmens 29 ist eine innere Längsachse 15, entlang der sich Mittelpunkte 42 von Kreisen 40 befinden. Dabei beschreibt der spiralförmig gekrümmte Weg 8 Krümmungsradien 44 in Bezug auf die zugehörigen Mittelpunkte 42 der zugehörigen Kreise 40, wobei die Mittelpunkte 42 auf der Längsachse 15 liegen. Bekanntermaßen gibt es bei einem von unten nach oben spiralförmig verlaufenden Weg 8 unendlich viele solcher Kreise 40, die übereinander liegen. In Figur 1 ist exemplarisch nur ein solcher Kreis 40 dargestellt.

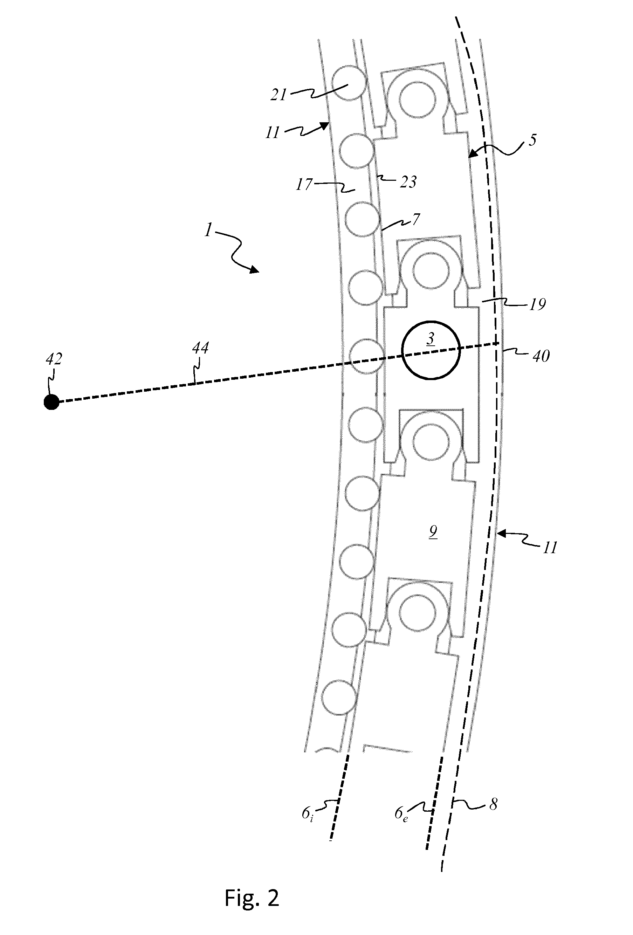

Die Rollen 21 (nicht dargestellt in Figur 1, siehe Figur 2) des erfindungsgemäßen Spiralförderers 1 eignen sich daher besonders, um an der Außenwand des Rahmens 29 angebracht zu werden und mit den dem Rahmen 29 zugewandten, inneren Seitenflächen der Kettenglieder 9 zusammenzuwirken. In Figur 1 sind der Übersicht wegen nur drei Kettenglieder 9 schematisch angedeutet. Der innere Seitenabschnitt 7 des Endlosbands 5 und die innere Führung 17 des Rahmens 29 verlaufen entlang der dem Rahmen 29 zugewandten inneren Seite 6ᵢ, die an dem Rahmen 29 spiralförmig nach oben verläuft.

Entlang des linear fallenden Rücklaufwegs 14 sind weder an den Seiten der Kettenglieder 9 noch an anderen Stellen der Kettenglieder 9 Rollen notwendig, da hier keine Radial- oder Reibungskräfte auf die Kettenglieder 9 einwirken und auch keine Polygoneffekte auftreten. Rollen sind nur an dem spiralförmig gekrümmten Weg 8 empfehlenswert.

Direkt gegenüber der äußeren Seite 6ₑ des Endlosbands 5 ist schematisch eine äußere Führung 19 für die Kettenglieder 9 angedeutet.

**Figur 2** zeigt eine Draufsicht auf einen Abschnitt eines Endlosbands 5 gemäß einer Ausführungsform des erfindungsgemäßen Spiralförderers 1. Der gezeigte Abschnitt könnte beispielsweise ein Abschnitt eines spiralförmig gekrümmten Wegs 8 sein.

Das Endlosband 5 wird durch zwei seiner Länge nach verlaufende Seiten 6ᵢ und 6ₑ gebildet, zwischen denen Kettenglieder 9 des Endlosbands 5 angeordnet sind. Die Kettenglieder 9 werden über einen Träger 11 geführt.

Der dargestellte Abschnitt des Endlosbands 5 beschreibt einen gekrümmten Weg 8, der wiederum einen Krümmungsradius 44 in Bezug auf einen Mittelpunkt 42 eines Kreises 40 beschreibt. Aus Übersichtsgründen ist die Länge des Krümmungsradius 44 im Vergleich zur gezeigten Krümmung des Wegs 8 zu kurz dargestellt. Die innere Seite 6ᵢ des Endlosbands 5 ist direkt dem Mittelpunkt 42 zugewandt und die äußere Seite 6ₑ ist vom Mittelpunkt 42 abgewandt. Auf dem Kettenglied 9, durch das der dargestellte Krümmungsradius 44 verläuft, ist ein Artikel 3 in Draufsicht gezeigt.

Eine innere Führung 17 für das Endlosband 5 ist am Träger 11 ausgebildet. Dabei verläuft die innere Führung 17 direkt gegenüber eines inneren Seitenabschnitts 7 der inneren Seite 6ᵢ des Endlosbands 5. Entlang der inneren Führung 17 ist eine Vielzahl von Rollen 21 angeordnet, die mit jeweils einer Seitenfläche 23 der Kettenglieder 9 zusammenwirken.

Eine äußere Führung 19 für das Endlosband 5 ist ebenfalls am Träger 11 ausgebildet. Dabei verläuft die äußere Führung 19 direkt gegenüber der äußeren Seite 6ₑ des Endlosbands 5 und umfasst keine Rollen.

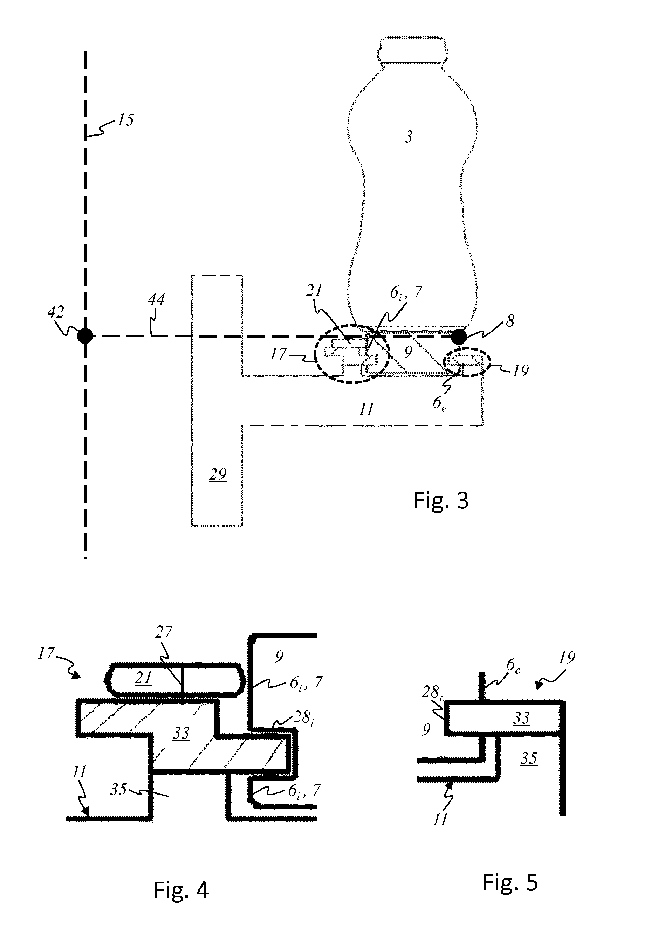

**Figur 3** zeigt schematisch einen Querschnitt entlang des Krümmungsradius 44 des Abschnitts des Endlosbands 5 gemäß der Ausführungsform des erfindungsgemäßen Spiralförderers 1 nach Figur 2. Eine innere Längsachse 15 definiert das Innere des Spiralförderers 1. Wie in den Figuren 1 und 2 beschrieben, befindet sich der Mittelpunkt 42 des Kreises 40 auf der inneren Längsachse 15. Ein Ausschnitt des Rahmens 29 ist dargestellt, um die sich der gekrümmte Weg 8 des Endlosbands 5 windet. Im Querschnitt ist der Weg 8 nur als Punkt sichtbar. Rund um den Rahmen 29 ist der Träger 11 ausgebildet, der seitlich von dem Rahmen 29 abgeht.

Die innere Führung 17 ist direkt gegenüber der inneren Seite 6ᵢ des Kettenglieds 9 und die äußere Führung 19 ist direkt gegenüber der äußeren Seite 6ₑ des Kettenglieds 9 angeordnet. Die innere Führung 17 und die äußere Führung 19 umfasst je ein Gleitführungselement (siehe Figuren 4 und 5). Die innere Führung 17 gegenüber dem inneren Seitenabschnitt 7 des Endlosbands 5 umfasst zusätzlich eine Rolle 21.

**Figur 4** zeigt eine Detailansicht der in Figur 3 gezeigten inneren Führung 17, die in der dargestellten Ausführungsform ein als handelsübliche TAB-Führung ausgestaltetes Gleitführungselement 33 umfasst. Oberhalb der TAB-Führung befindet sich die Rolle 21, die entlang des inneren Seitenabschnitts 7 der inneren Seite 6ᵢ des Kettenglieds 9 und um eine Welle 27 rollt.

An der Oberseite des Trägers 11 ist ein Sockel 35 ausgebildet, auf dem die TAB-Führung angeordnet ist. Die TAB-Führung hat zwei Enden ausgebildet, wovon das eine Ende mit einer Nut 28ᵢ des inneren Seitenabschnitts 7 des Kettenglieds 9 zusammenwirkt und so das Kettenglied 9 auf dem Träger 11 hält.

**Figur 5** zeigt eine Detailansicht der in Figur 3 gezeigten äußeren Führung 19. Auch hier hat der Träger 11 auf einem Teil seiner Oberseite einen Sockel 35 ausgebildet, auf dem das Gleitführungselement 33 angebracht ist, ebenfalls als TAB-Führung ausgestaltet. Ein Ende der TAB-Führung wirkt mit einer Nut 28ₑ der äußeren Seite 6ₑ des Kettenglieds 9 zusammen und hält so das Kettenglied 9 auf dem Träger 11.

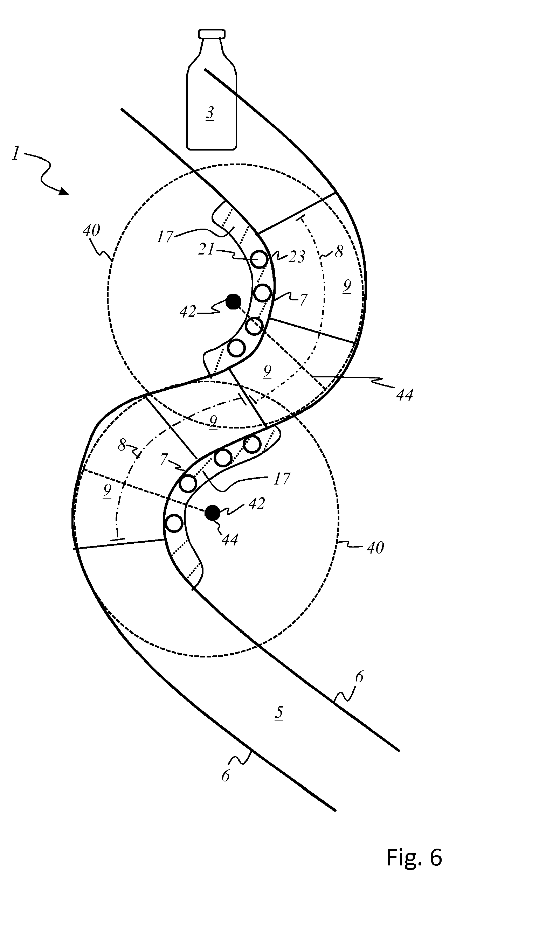

**Figur 6** zeigt eine schematische Draufsicht einer anderen Ausführungsform des erfindungsgemäßen Spiralförderers 1 für Artikel 3, wobei das Endlosband 5 des Spiralförderers 1 unterschiedlich gerichtete Krümmungen aufweist. Die beiden Krümmungen definieren zwei gekrümmte Wege 8, auf denen nur sehr schematisch die Lage von Kettengliedern 9 angedeutet ist. Jede der beiden Krümmungen beschreibt jeweils einen Kreis 40 mit einem Krümmungsradius 44 und einem Mittelpunkt 42. Dadurch dass die Krümmungen unterschiedlich gerichtet sind, befinden sich die beiden inneren Seitenabschnitte 7 und die zugehörigen inneren Führungen 17 an sich gegenüberliegenden Seiten 6 des Endlosbands 5.

Entlang der jeweiligen inneren Führung 17 entlang des jeweiligen inneren Seitenabschnitts 7 des Endlosbands 5 sind mehrere Rollen 21 angeordnet. Jeweils ein innerer Seitenabschnitt 7 verläuft entlang zwei Kettengliedern 9 und damit an zwei Seitenflächen 23 dieser Kettenglieder 9. Jeweils mindestens zwei Rollen 21 wirken mit jeweils einer Seitenfläche 23 der Kettenglieder 9 zusammen (siehe hierzu auch Figur 2).

Der Übersicht wegen sind in Figur 6 nur wenige Elemente dargestellt.

Wenn auch bei der vorstehenden Figurenbeschreibung durchgängig die Rede davon ist, dass die Artikel auf dem Endlosband stehend befördert werden, so ist dies keineswegs einschränkend zu verstehen. Es sind Abwandlungen möglich, bei denen das Endlosband zwar als Transportmittel für die Artikel fungiert, ohne dass die Artikel hierzu auf dem Förderband stehen müssen. Sie können bspw. in einer Führung gleitend befördert werden, wobei am Endlosband Mitnehmerelemente o. dgl. angeordnet sind, welche die Artikel in der Führung in die Förderrichtung schieben.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Insbesondere können andere Gleitführungselemente 33 als TAB-Führungen verwendet werden und die gekrümmten Wege 8 andere Formen als die dargestellten aufweisen, ohne den Schutzbereich der nachstehenden Ansprüche zu verlassen.

### Bezugszeichenliste:

- 1: Spiralförderer
- 3: Artikel
- 5: Endlosband
- 6: Seite
- 7: innerer Seitenabschnitt
- 8: gekrümmter Weg
- 9: Kettenglied
- 11: Träger
- 13: oberer Wegabschnitt
- 14: Rücklaufweg
- 15: innere Längsachse
- 17: innere Führung
- 19: äußere Führung
- 21: Rolle
- 22: Rollenaufnahme
- 23: Seitenfläche
- 24: Seitenfläche
- 27: Welle
- 28: Nut
- 29: Rahmen
- 31: Fuß
- 33: Gleitführungselement
- 35: Sockel
- 40: Kreis
- 42: Mittelpunkt
- 44: Krümmungsradius
- TR: Transportrichtung

## Patentansprüche

1. Spiralförderer (1) zum Befördern von Artikeln (3) durch ein Endlosband (5), wobei das Endlosband (5) seiner Länge nach zwei Seiten (6) aufweist, auf einem Träger (11) geführt und aus einer Vielzahl von Kettengliedern (9) aufgebaut ist, und wobei das Endlosband (5) in mindestens einem Abschnitt einen gekrümmten Weg (8) beschreibt, der einen Krümmungsradius (44) in Bezug auf einen Mittelpunkt (42) eines Kreises (40) beschreibt, wobei der Träger (11) mindestens eine innere Führung (17) für das Endlosband (5) ausgebildet hat, die entlang eines inneren Seitenabschnitts (7) derjenigen Seite (6) des Endlosbands (5) verläuft, die bei dem gekrümmten Weg (8) unmittelbar dem Mittelpunkt (42) gegenüber liegt, **dadurch gekennzeichnet, dass** entlang der inneren Führung (17), die entlang des inneren Seitenabschnitts (7) verläuft, eine Vielzahl von Rollen (21) angeordnet ist, die mit jeweils einer Seitenfläche (23) der Kettenglieder (9) zusammenwirken.

2. Spiralförderer (1) nach Anspruch 1, wobei das Endlosband (5) mindestens einen Höhenunterschied überwindet.

3. Spiralförderer (1) nach einem der Ansprüche 1 bis 2, wobei die Seitenflächen (23) der Kettenglieder (9) eine Krümmung ausgebildet haben, die der Krümmung der inneren Führung (17) am mindestens einen gekrümmten Weg (8) entspricht.

4. Spiralförderer (1) nach einem der Ansprüche 1 bis 3, wobei während des Transports je Kettenglied (9) stets mindestens zwei Rollen (21) der inneren Führung (17) mit dem jeweiligen Kettenglied (9) in Rollkontakt stehen.

5. Spiralförderer (1) nach einem der Ansprüche 1 bis 4, wobei für jede der Rollen (21) eine frei zugängliche Rollenaufnahme (22) am Träger (11) vorgesehen ist.

6. Spiralförderer (1) nach einem der Ansprüche 1 bis 5, wobei bei mindestens einigen der Kettenglieder (9) mindestens eine Tragrolle unterhalb jedes dieser Kettenglieder (9) angeordnet ist und mit dem Träger (11) für das Endlosband (5) zusammenwirkt.

7. Spiralförderer (1) nach einem der Ansprüche 1 bis 6, wobei die Kettenglieder (9) des Endlosbands (5) Spritzgussteile umfassen.

8. Spiralförderer (1) nach Anspruch 7, wobei die Kettenglieder (9) aus Kunststoff sind.

9. Spiralförderer (1) nach einem der Ansprüche 1 bis 7, wobei das Endlosband (5) mit zusätzlichen Tragelementen als Auflage für die zu befördernden Artikel (3) versehen ist.

10. Spiralförderer (1) nach einem der Ansprüche 1 bis 7, wobei das Endlosband (5) mit zusätzlichen Mitnehmerelementen als Auflage und/oder Anlageflächen für die zu befördernden Artikel (3) versehen ist.
